Europäisches Patentamt

(19) European Patent Office

Office européen des brevets

(11) Numéro de publication : **0 145 546**
**B1**

(12) FASCICULE DE BREVET EUROPÉEN

(45) Date de publication du fascicule du brevet :
20.01.88

(51) Int. Cl.⁴ : **B 62 D 5/083**

(21) Numéro de dépôt : **84402245.9**

(22) Date de dépôt : **07.11.84**

(54) Distributeur hydraulique pour servomécanisme à réaction sur l'organe d'entrée.

(30) Priorité : **18.11.83 ES 527578**

(43) Date de publication de la demande :
**19.06.85 Bulletin 85/25**

(45) Mention de la délivrance du brevet :
**20.01.88 Bulletin 88/03**

(84) Etats contractants désignés :
**DE FR GB IT**

(56) Documents cités :
**EP-A- 0 053 560**
**EP-A- 0 066 507**
**EP-A- 0 072 311**
**EP-A- 0 072 731**
**EP-A- 0 084 487**
**EP-A- 0 112 201**
**EP-A- 0 112 209**
**DE-B- 2 508 268**

(73) Titulaire : **BENDIX ESPANA S.A.**
**Balmes 243**
**Barcelona 6 (ES)**

(72) Inventeur : **Simon Bacardit, Juan**
**Calle Mallorca 451 6o 4aA**
**Barcelona 13 (ES)**

(74) Mandataire : **Le Moenner, Gabriel et al**
**SERVICE BREVETS BENDIX 44, Rue François 1er**
**F-75008 Paris (FR)**

## Description

La présente invention concerne les distributeurs hydrauliques pour servomécanisme, plus particulièrement pour servodirection de véhicule automobile, comprenant un organe primaire, relié à un organe d'actionnement d'entrée, et un organe secondaire associés par l'intermédiaire d'un accouplement à course morte permettant un déplacement relatif limité entre ces organes primaire et secondaire de part et d'autre d'une position centrale, ces organes primaire et secondaire définissant mutuellement au moins une première paire de circuits de fluide parallèles, entre une source de pression et une décharge, comportant chacun au moins un premier, un second et un troisième étranglement disposés en série entre la source de pression et la décharge, le second et le troisième étranglement étant modulables, le premier second et troisième étranglement étant mis en œuvre lors dudit déplacement relatif entre ces deux organes pour commander un dispositif d'assistance hydraulique comprenant deux chambres antagonistes reliées respectivement à un circuit correspondant de la première paire de circuits entre les second et troisième étranglements de ce circuit.

Des distributeurs hydrauliques de ce type sont décrits notamment dans la demande de brevet espagnol n° 518 114 ou encore le document EP-A 0 084 487 au nom de la demanderesse. Dans ces distributeurs, les conduits d'alimentation des chambres antagonistes du vérin d'assistance sont respectivement connectés aux circuits de la première paire de circuits parallèles immédiatement en aval des premiers étranglements de ces circuits. En fonctionnement, et indépendamment des dispositifs de réaction éventuellement associés, ce sont les deux étranglements avals associés 3' et 2 (ou 3 et 2' selon le sens d'actionnement) (en supposant numérotés 1, 2, 3 et 1', 2', 3', dans l'ordre, les trois étranglements de chaque circuit) qui entrent les premiers en jeu lors d'un déplacement relatif entre les deux organes primaire et secondaire pour introduire des restrictions initialement sensiblement identiques et faibles, ce qui provoque, dans le distributeur, une augmentation de la pression d'entrée (ainsi que de la pression d'entrée de réaction, le cas échéant) déterminant le point central ou tronçon horizontal de départ de la caractéristique couple d'actionnement/pression de sortie du distributeur, sans toutefois qu'il ne se crée une différentielle de pression entre les chambres du vérin d'assistance (c'est-à-dire en aval des premiers étranglements qui n'ont jusqu'ici produit aucun effet).

La poursuite du déplacement relatif des organes primaire et secondaire rend alors opérant l'étranglement amont correspondant 1 (ou 1'), réalisé généralement par un bord chanfreiné d'une ouverture du rotor, qui fournit une restriction progressive créant la différentielle de pression dans le vérin d'assistance, jusqu'à atteindre, dans la chambre pressurisée du vérin, la pression maximum de la source lorsque l'étranglement amont 1 atteint la position de fermeture (à la suite de quoi la partie aval du circuit correspondant est désalimentée).

Cet agencement, quoique bien adapté et performant, pose toutefois des problèmes de réalisation pour limiter, dans les circuits de commande, l'apparition de pics de pression résultant de la mise en œuvre progressive puis simultanée des différents étranglements.

La présente invention a pour objet de proposer un nouvel agencement de distributeur du type défini ci-dessus, présentant un fonctionnement amélioré et, notamment, une meilleure stabilité dynamique.

A cet effet, selon l'invention, chaque chambre du dispositif d'assistance est reliée au circuit de fluide correspondant de la première paire de circuits de fluide parallèles uniquement entre les second et troisième étranglements de ce circuit, les premiers étranglements introduisant, lorsqu'ils sont mis en œuvre sous l'effet d'un déplacement relatif entre les organes primaire et secondaire, une restriction sensiblement constante, les troisièmes étranglements introduisant pour leur part, au moment où ils deviennent opérants, une restriction progressive sensiblement linéaire.

Selon une caractéristique additionnelle de l'invention, chaque second étranglement des circuits de la première paire de circuits parallèles introduit, lorsqu'il est mis en œuvre, une restriction tout d'abord sensiblement constante et égale à celle du premier étranglement de l'autre circuit, simultanément avec ce dernier, puis progressive sensiblement simultanément avec le troisième étranglement de l'autre circuit.

Dans un tel agencement, c'est donc l'étranglement amont (1 ou 1') de chaque circuit parallèle qui, en entrant le premier en jeu dans le circuit de commande d'assistance, détermine, avec le second étranglement de l'autre circuit (2' ou 2), le point central de fonctionnement du distributeur (et la pression d'entrée de réaction), ce même second étranglement déterminant, avec l'étranglement aval du premier circuit (3 ou 3'), la pression différentielle d'assistance (ainsi que la réaction proportionnelle exercée sur l'organe primaire).

Cet agencement permet d'autre part, dans un distributeur du type à rotor en étoile, où les étranglements sont réalisés par des bords coopérants de cavités adjacentes dans les faces en regard du stator et du rotor, une meilleure implantation desdites cavités avec des passages de débits plus importants dans les phases de fonctionnement du distributeur.

Ainsi, selon une autre caractéristique additionnelle de l'invention, dans un distributeur dont l'organe primaire est un rotor plat en étoile monté à rotation dans un logement complémentaire discoïde d'un stator cylindrique constituant l'organe secondaire, les étranglements des circuits de la paire de circuits parallèles étant définis par des bords coopérants s'étendant sensiblement radialement de lumières formées dans les faces axialement en regard du rotor et du stator, les premier, second, troisième étranglements de la première paire de circuits sont formés dans les bras du rotor en étoile.

Une telle construction de distributeur permet d'utiliser les chambres délimitées dans le logement discoïde du stator de part et d'autre de chaque bras du rotor en étoile comme chambres de réaction antagonistes, comme également décrit dans la demande de brevet espagnol N° 518 114 sus-mentionnée où toutefois les moyens de valve de distribution de réaction sont formés dans les bras du rotor, au voisinage de la périphérie extérieure de ces derniers.

Ainsi, selon une autre caractéristique additionnelle de l'invention, le distributeur hydraulique de l'invention comporte un dispositif de réaction à chambres opposées couplé à l'organe primaire et actionné par des pressions de réactions fournies, à partir de la source de pression, par des quatrièmes étranglements ménagés respectivement dans une seconde paire de circuits parallèles définis par les organes primaire et secondaire et mis en œuvre en premier lors du déplacement relatif entre ces organes primaire et secondaire.

La présente invention a pour autre objet de proposer un distributeur de ce type, de structure compacte et robuste.

Pour ce faire, selon une autre caractéristique additionnelle de l'invention, les quatrièmes étranglements de la seconde paire de circuits sont formés dans l'embase des bras du rotor en étoile.

D'autres caractéristiques et avantages de la présente invention ressortiront de la description suivante d'un mode de réalisation, donné à titre illustratif mais nullement limitatif, faite en relation avec des dessins annexés, sur lesquels :

— la Fig. 1 est un diagramme schématique fonctionnel d'un distributeur hydraulique selon l'invention ;

— la Fig. 2 est une vue schématique en coupe transversale d'un distributeur de commande de servo-direction à rotor en étoile conformément à l'invention ;

— les Fig. 3, 4, 5 sont des vues développées suivant la ligne de coupe III-III de la Fig. 2 du distributeur de cette Fig. 2 et montrent trois phases de fonctionnement successives du distributeur ;

— la Fig. 6 est une vue en coupe longitudinale partielle suivant la coupe VI-VI de la Fig. 7 d'un boîtier de direction utilisant un distributeur hydraulique selon la Fig. 2 ; et

— la Fig. 7 est une vue en coupe transversale suivant le plan de coupe VII-VII de la Fig. 6.

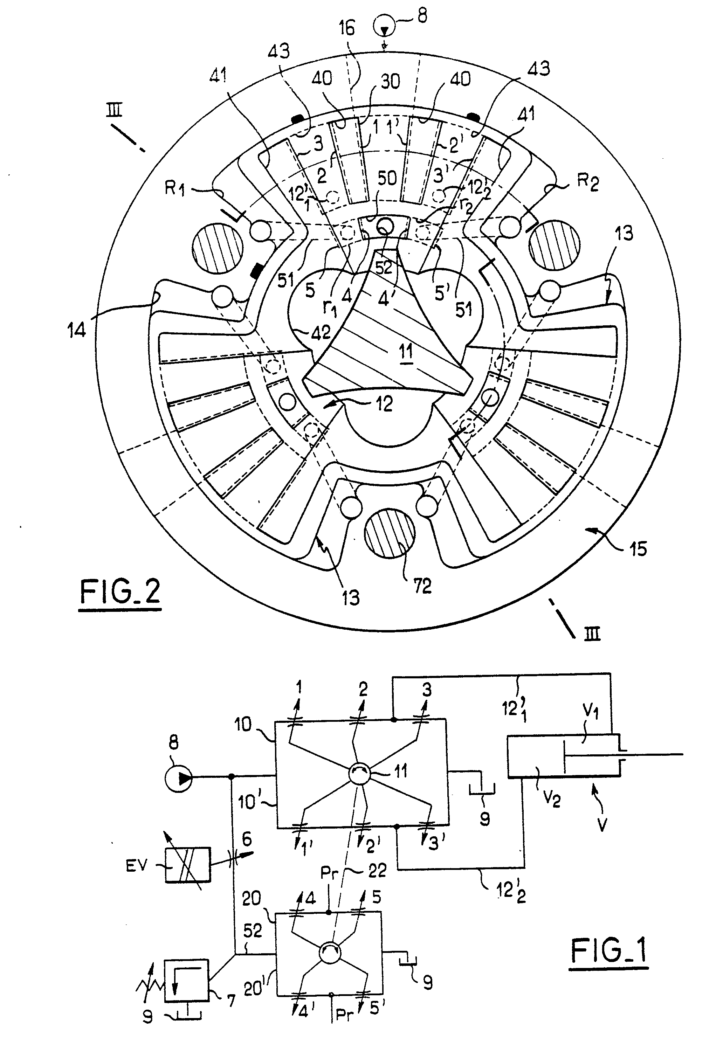

Comme représenté schématiquement sur la Fig. 1, le distributeur hydraulique, selon une disposition connue, comprend deux circuits parallèles 10, 10' entre une source de pression 8 (pompe hydraulique ou tout autre dispositif) et une décharge 9, dans chacun desquels circuits trois dispositifs d'étranglements ou restrictions modulables 1, 2 et 3-1', 2' et 3' respectivement, sont agencés en série de manière à être actionnés simultanément par l'organe d'entrée 11 du distributeur commandant les deux chambres de travail $V_1$ et $V_2$ de l'actionneur d'assistance V. Dans le schéma représenté, le distributeur est associé à un dispositif distributeur de réaction comprenant de même deux circuits parallèles 20 et 20' entre la source de pression 8 et la décharge 9, chacun de ces circuits 20 et 20' étant munis respectivement de deux étranglements en série 4 et 5, 4' et 5' actionnés, par l'intermédiaire d'une transmission figurée en 22, à partir de l'organe de commande d'entrée 11 du distributeur d'assistance. Entre la source de pression 8 et le dispositif distributeur de réaction est intercalé un étranglement variable 6 commandé extérieurement par un actionneur électromagnétique EV asservi par exemple à des paramètres liés à la marche du moteur ou du véhicule et fournis par l'ordinateur de bord du véhicule. Entre cet étranglement variable 6 et le dispositif distributeur d'assistance est disposée une dérivation conduisant à l'entrée d'une vanne de régulation de pression ou de délestage 7 dont la sortie aboutit à la décharge 9 et qui est soumise à la sollicitation d'un ressort dont la force est réglée afin de déterminer la réaction maximale désirée sur le distributeur d'assistance. La mise en œuvre séquentielle des étranglements variables 4, 5 et 4', 5' du dispositif distributeur de réaction crée entre les deux étranglements en série de chaque circuit parallèle 20 ou 20' une pression de réaction modulée $P_r$ qui est adressée à des chambres de réaction antagonistes exerçant sur l'organe de commande d'entrée 11 du distributeur d'assistance une réaction modulée s'opposant à son déplacement, comme on le verra par la suite.

Conformément à l'invention, les chambres $V_1$ et $V_2$ de l'actionneur d'assistance V sont reliées au distributeur d'assistance par des conduits $12'_1$ et $12'_2$, respectivement, connectés au circuit de distribution correspondant 10 ou 10' entre les deux étranglements variables avals 2 et 3, respectivement 2' et 3'. De ce fait, ces étranglements variables 1-3 et 1'-3' sont agencés de façon que, lors de la mise en œuvre du distributeur d'assistance, les étranglements 1 et 2' (ou 1' et 2, dans l'autre sens) sont mis en œuvre simultanément pour créer, dans le distributeur, une pression d'entrée d'assistance (et — du fait de l'actionnement synchrone des étranglements variables 4 et 5 — une pression de réaction), sans toutefois créer de différentielle de pression entre les chambres $V_1$ et $V_2$ de l'actionneur d'assistance V. En continuant d'actionner l'organe de commande d'entrée 11, les étranglements 2' et 3 (ou 2 et 3') créent alors la différentielle de pression fournissant, via l'actionneur V, l'assistance requise.

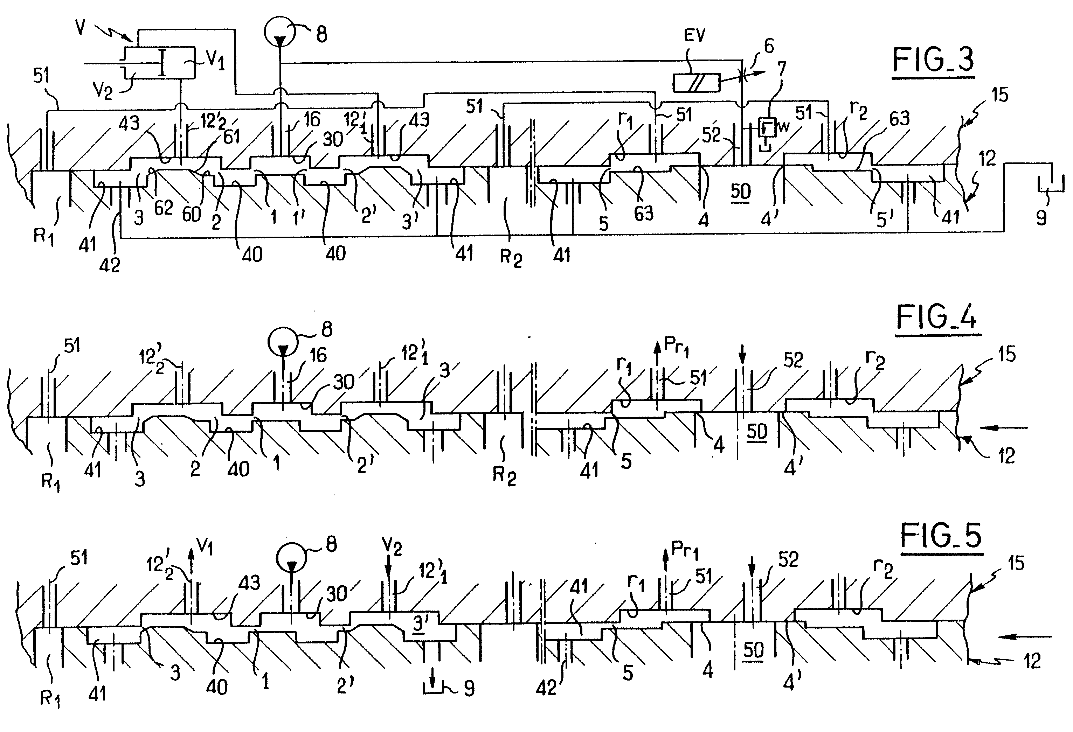

Les Fig. 2 à 5 illustrent une réalisation pratique du système de la Fig. 1. Sur ces figures, le distributeur d'assistance est du type à rotor plat en étoile 12 comportant des bras 13 faisant saillie radialement vers l'extérieur et reçu dans un logement complémentaire discoïde 14 formé dans un stator cylindrique 15, dans lequel le rotor 12 peut tourner à coulissement étanche sur une plage angulaire limitée. Dans le stator 15 sont ménagés des passages radiaux 16 reliés à la source de pression 8 et débouchant dans les faces axiales internes du stator par des lumières d'alimentation 30 auxquelles font face, dans la position centrale de repos illustrée sur les Fig. 2 et 3, une partie de voile centrale des bras 13 du rotor 12 entre deux lumières intermédiaires symétriques sensiblement trapézoïdales 40 formées dans les bras 13 du rotor. Les bords coopérants de chaque lumière 30 et des lumières 40 forment les étranglements 1 et 1'. Comme on le voit sur les Fig. 3 à 5, les bords adjacents des lumières 40 forment des décrochements francs et ménagent en permanence un passage restreint avec le bord correspondant, également franc, de la lumière 30.

De part et d'autre des lumières intermédiaires 40, chaque bras 13 du rotor 12 comporte des lumières de retour 41 se prolongeant radialement vers l'intérieur pour communiquer avec l'espace interne 42 ménagé entre la partie de moyeu centrale du rotor 12 et l'arbre de commande d'entrée 11 auquel le rotor est accouplé. Entre les lumières adjacentes 40 et 41, le stator 15 comporte une lumière de distribution de configuration sensiblement trapézoïdale 43 dont les bords radiaux latéraux forment avec les bords correspondants des lumières 40 et 41 du rotor 12 les étranglements variables 2 et 3 (ou 2' et 3'), respectivement. Les lumières 43 de part et d'autre de chaque lumière d'entrée 30 communiquent respectivement avec les chambres $V_1$ et $V_2$ de l'actionneur d'assistance V par les conduits 12 et 12' également visibles sur la Fig. 2.

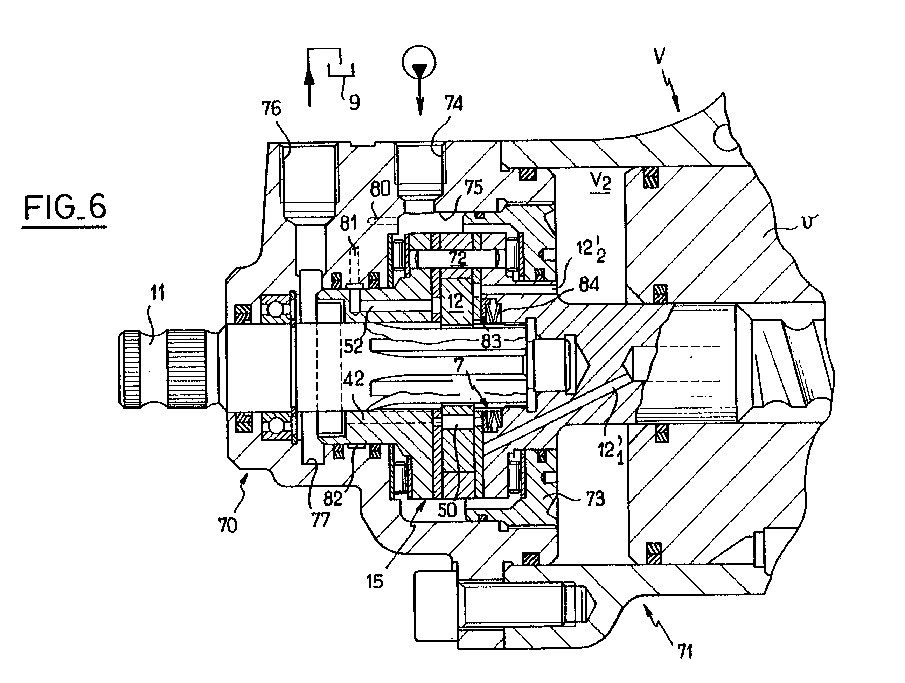

Conformément à un aspect de l'invention, au niveau de l'embase de chaque bras 13 du rotor 12, radialement à l'intérieur par rapport au voile central séparant les lumières de rotor 40, est ménagée, dans ce rotor, une lumière intérieure 50 de forme trapézoïdale fermée de faible extension radiale. De part et d'autre de cette lumière 50 sont formées, dans le stator 15, deux lumières de réaction symétriques $r_1$ et $r_2$ communiquant respectivement, par des conduits 51 formés dans le stator avec une chambre de réaction correspondante $R_1$ ou $R_2$ délimitée dans le logement 14 du stator 15 de part et d'autre de chaque bras 13 du rotor 12. Un conduit 52 débouche dans la partie de voile non évidée du stator entre les deux lumières $r_1$ et $r_2$ du rotor au centre de la lumière 50 du rotor afin d'alimenter cette dernière avec la pression d'alimentation provenant de la source de pression 8 via l'étranglement variable 6. Comme on le voit bien sur les Fig. 2 et 3, les bords des lumières $r_1$ et $r_2$ définissent, avec la lumière 50 d'une part et les prolongements radiaux vers l'intérieur des lumières 41 d'autre part, les étranglements de réaction 4, 5 et 4', 5'. Dans la position de repos représentée sur les Fig. 2 et 3, les bords coopérants des lumières 50 et $r_1$ ou $r_2$ sont telles que les étranglements 4 et 4' soient fermés et que, dès que le rotor 12 est déplacé par rapport au stator 15, l'un de ces étranglements 4 ou 4' s'ouvre immédiatement, l'autre demeurant fermé (cf. Fig. 4 et 5).

On se reportera maintenant à la Fig. 3 pour détailler la forme des bords des lumières du rotor permettant d'assurer la séquence de mise en œuvre des étranglements 1-3 ou 1'-3' détaillée plus avant (les bords des lumières du stator étant avantageusement constitués par des épaulements rectangulaires). Les bords des lumières 40 éloignés de la lumière d'entrée 30 du stator sont constitués de façon à présenter un plat 60 sensiblement coplanaire avec la partie de voile du rotor séparant ces deux lumières 40, puis un chanfrein 61. Le bord des lumières 41 dirigé vers la lumière d'entrée 30 du stator présente, au niveau des lumières de distribution 43 du stator un chanfrein 62 alors que ce bord présente, au niveau des lumières $r_1$ ou $r_2$ un plat prononcé 63 s'étendant, dans la position de repos, sur la majeure partie de la lumière $r_1$ ou $r_2$ correspondante.

De cette façon, comme on le voit bien sur la séquence des Fig. 3 à 5, les étranglements entrant les premiers en jeu sont les étranglements 4 ou 4' (les étranglements 5 ou 5' maintenant une restriction sensiblement constante). Entrent ensuite en jeu (dans l'hypothèse du déplacement représenté sur les Fig. 4 et 5) les étranglements 1 et 2'. L'étranglement 1 maintient une restriction sensiblement constante, de même que — compte tenu du plat 60 — l'étranglement 2' dans cette phase de fonctionnement. Comme représenté sur la Fig. 5, l'étranglement 3 entre ensuite en jeu, introduisant une restriction progressive sensiblement linéaire de même qu'alors — en raison du chanfrein 61 — l'étranglement 2'. On comprend donc que, dans la première configuration de la Fig. 4, la pression dans la lumière d'entrée 30 augmente (de même que la pression dans la lumière 50) sans que toutefois il ne se crée une différentielle de pression entre les lumières de distribution 43 du stator. Par contre, dans la configuration de la Fig. 5, du fait des restrictions introduites par les étranglements 3 et 2', la pression dans la lumière d'entrée 30 est adressée à la chambre $V_1$ de l'actionneur dont la chambre $V_2$ s'évacue vers la décharge 9 via l'étranglement grand ouvert 3', la pression de réaction dans la lumière $r_1$ et dans la chambre de réaction $R_1$ étant proportionnelle à la pression engendrée dans la chambre $V_1$ de l'actionneur d'assistance. Le fonctionnement dans le sens inverse de celui représenté sur les Fig. 4 et 5 est en tout point symétrique.

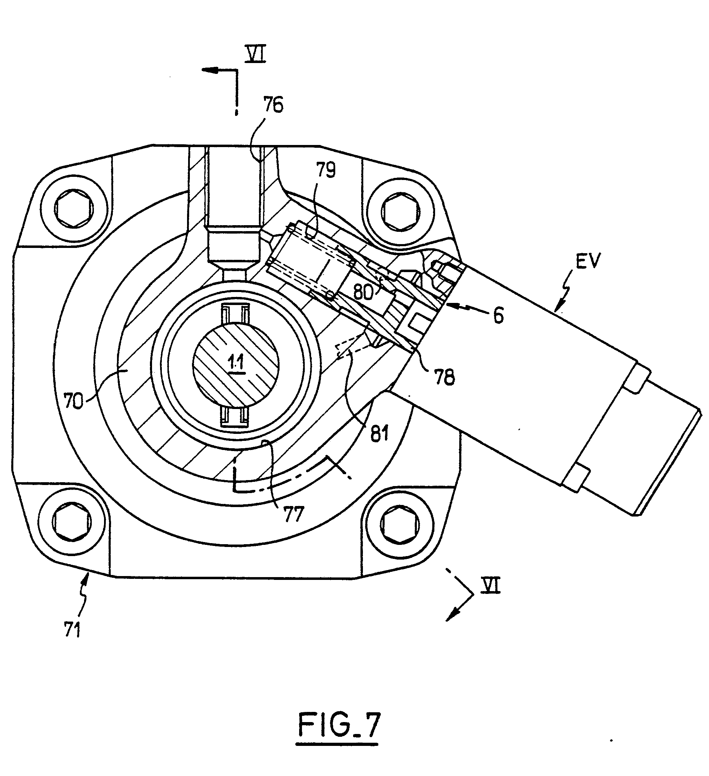

On a représenté, à titre illustratif, sur les Fig. 6 et 7, le distributeur hydraulique d'assistance à dispositif de réaction incorporé de la Fig. 2 intégré dans le couvercle 70 d'un boîtier de servo-direction compacte 71 formant également le cylindre d'assistance V dont on reconnaît le piston V couplé, par l'intermédiaire d'un système à vis et à circulation de billes, au stator 15 renfermant le rotor en étoile 12 et constitué, en l'espèce, de deux pièces d'extrémité et d'une bague annulaire intermédiaire couplées en rotation par des pions 72 et maintenues en appui contre le fond du couvercle et une plaque d'obturation interne 73 par l'intermédiaire de roulements de butée. Dans le couvercle 70 est formée une entrée de fluide sous pression 74 débouchant dans une cavité interne 75 du couvercle 70 abritant le distributeur hydraulique, et avec laquelle communiquent donc les passages radiaux 16 du stator 15. Dans le couvercle 70 est également ménagée une ouverture de retour 76 communiquant avec une chambre annulaire interne 77 entourant l'arbre d'entrée 11 et où débouchent les conduits axiaux intérieurs de retour 42 du distributeur. Comme on le voit sur la Fig. 7, dans le couvercle 70 est également aménagé l'étranglement variable 6 dont le tiroir 78, commandé par l'actionneur électromagnétique EV, coulisse dans un alésage 79 communiquant avec l'ouverture de retour 76 et avec la cavité interne 75 par un conduit 80. La pression dans la chambre de modulation de l'étranglement variable 6 est transmise, par un conduit 81, à une gorge annulaire 82 formée dans le couvercle 70 autour de la pièce avant du stator 15 puis, de là, vers la lumière 50 du rotor par le conduit 52. Dans le mode de réalisation particulier représenté sur la Fig. 6, la soupape tarée de limitation de pression de réaction 7 est constituée par un anneau formant clapet 83 sollicité par des rondelles élastiques 84 formant le ressort de tarage, cet ensemble étant disposé dans une cavité intérieure de la pièce d'extrémité intérieur du stator 15 en regard des lumières intérieures 50 du rotor et des lumière de réaction $r_1$ et $r_2$ du stator.

## Revendications

1. Distributeur hydraulique pour servomécanisme, plus particulièrement pour servodirection de véhicule automobile, comprenant un organe primaire (12), relié à un organe d'actionnement d'entrée (11), et un organe secondaire (15) associés par l'intermédiaire d'un accouplement à course morte permettant un déplacement relatif limité entre ces organes primaire et secondaire de part et d'autre d'une position centrale, ces organes primaire et secondaire définissant mutuellement au moins une première paire de circuits de fluide parallèles (10, 10'), entre une source de pression (8) et une décharge (9), comportant chacun au moins un premier (1, 1'), un second (2, 2') et un troisième (3, 3') étranglement disposés en série entre la source de pression (8) et la décharge (9), le second (2, 2') et le troisième (3, 3') étranglement étant modulables, le premier (1, 1') second (2, 2') et troisième (3, 3') étranglement étant mis en œuvre lors dudit déplacement relatif entre ces deux organes (12, 15) pour commander un dispositif d'assistance hydraulique (V) comprenant deux chambres antagonistes ($V_1$, $V_2$) reliées respectivement à un circuit correspondant de la première paire de circuits (10, 10') entre les second (2, 2') et troisième (3, 3') étranglements de ce circuit, caractérisé en ce que chaque chambre ($V_1$, $V_2$) du dispositif d'assistance est reliée au circuit de fluide correspondant (10, 10') uniquement entre les second (2, 2') et troisième (3, 3') étranglements de ce circuit, les premiers étranglements (1, 1') introduisant une restriction sensiblement constante, les troisièmes étranglements (3, 3') introduisant une restriction progressive sensiblement linéaire.

2. Distributeur hydraulique selon la revendication 1, caractérisé en ce que chaque second étranglement (2, 2') introduit une restriction tout d'abord sensiblement constante (60) et égale à celle du premier étranglement (1, 1') de l'autre circuit, simultanément avec ce dernier, puis progressive (61) sensiblement simultanément avec le troisième étranglement (3, 3') de l'autre circuit.

3. Distributeur hydraulique selon la revendication 1 ou la revendication 2, caractérisé en ce qu'il comporte un dispositif de réaction à chambres opposées ($R_1$, $R_2$) couplé à l'organe primaire (12) et actionné par des pressions de réaction ($P_r$) fournies, à partir de la source de pression (8), par des quatrièmes étranglements (4, 4') ménagés respectivement dans une seconde paire de circuits parallèles (20, 20') définis par les organes primaire (12) et secondaire (15), et mis en œuvre en premier lors du déplacement relatif entre ces organes primaire et secondaire.

4. Distributeur hydraulique selon l'une des revendications précédentes, caractérisé en ce que l'organe primaire (12) est un rotor plat en étoile monté à rotation dans un logement complémentaire discoïde (14) d'un stator cylindrique (15) constituant l'organe secondaire, lesdits étranglements (1, 1'; 2, 2'; 3, 3'; 4, 4') étant définis par des bords coopérants s'étendant sensiblement radialement de lumières (30; 40; 43; 41) formées dans les faces axialement en regard du rotor et du stator.

5. Distributeur hydraulique selon la revendication 3 ou la revendication 4, caractérisé en ce que les chambres de réaction ($R_1$, $R_2$) sont formées par des portions décalées radialement vers l'extérieur dudit logement (14) du stator (15) de part et d'autre de chaque bras (13) du rotor en étoile.

6. Distributeur hydraulique selon la revendication 5, caractérisé en ce que les premier (1, 1'), second (2, 2') et troisième (3, 3') étranglements de la première paire de circuits (10, 10') sont formés dans les bras (13) du rotor en étoile (12).

7. Distributeur hydraulique selon la revendication 6, caractérisé en ce que les quatrièmes étranglements (4, 4') de la seconde paire de circuits (20, 20') sont formés dans l'embase des bras du rotor en étoile (12).

8. Distributeur hydraulique selon la revendication 7, caractérisé en ce que les circuits de la seconde paire de circuits (20, 20') comprennent chacun un cinquième étranglement (5, 5') disposé entre le quatrième étranglement associé (4, 4') et la décharge (9).

9. Distributeur hydraulique selon la revendication 7 ou la revendication 8, caractérisé en ce que les premiers étranglements (1, 1') sont formés entre une lumière d'alimentation (30) du stator (15) et deux lumières intermédiaires fermées (40) du rotor (12) de part et d'autre de la lumière d'alimentation (30), les seconds étranglements (2, 2') étant formés entre chacune desdites lumières intermédiaires (40) du rotor et une lumière de distribution correspondante (43) du stator (15), reliée à une chambre ($V_1$, $V_2$) du dispositif d'assistance (V), les troisièmes étranglements (3, 3') étant formés entre chacune de ces lumières de distribution (43) du stator et une lumière de retour (41) du rotor se prolongeant radialement vers l'intérieur et débouchant dans le canal de retour central (42) de distributeur.

10. Distributeur hydraulique selon la revendication 8 et la revendication 9, caractérisé en ce que les quatrièmes étranglements (4, 4') sont formés entre une lumière intérieure fermée (50) du rotor, décalée radialement vers l'intérieur des lumières intermédiaires (40) du rotor, et deux lumières de réaction ($r_1$, $r_2$) du stator disposées de part et d'autre de la lumière intérieure (50) du rotor, communiquant en permanence avec les chambres de réaction associées ($R_1$, $R_2$) et sélectivement avec les lumières de retour correspondantes (41) du rotor via lesdits cinquièmes étranglements (5, 5').

11. Distributeur hydraulique selon l'une quelconque des revendications 3 à 10, caractérisé en ce qu'il comprend un étranglement modulable extérieurement (6) entre la source de pression (8) et la seconde paire de circuits (20, 20').

12. Distributeur hydraulique selon la revendication 11, caractérisé en ce qu'il comprend une soupape de limitation de pression de réaction (7) entre l'étranglement modulable extérieurement (6) et la seconde paire de circuits (20, 20').

13. Distributeur hydraulique selon la revendication 12 dans son rattachement à l'une des revendications 10 et 11, caractérisé en ce que la soupape de limitation de pression de réaction (7) est intégrée dans le stator (15).

14. Distributeur hydraulique selon la revendication 13, caractérisé en ce que la soupape de limitation de pression (7) comprend un anneau formant clapet (83) sollicité axialement par des rondelles élastiques (84) et disposé en regard des lumières intérieures (50) du rotor (12) et des lumières de réaction ($r_1$, $r_2$) du stator (15).

## Claims

1. Hydraulic distributor for servomechanism, more particularly for the servo-steering of a motor vehicle, incorporating a primary component (12) joined to an input actuating component (11), and a secondary component (15) which are associated through the intermediary of a coupling with dead travel allowing limited relative displacement between these primary and secondary components on each side of a central position, these primary and secondary components mutually defining at least one first pair of parallel fluid circuits (10, 10'), between a source of pressure (8) and a discharge (9), each incorporating at least first (1, 1'), second (2, 2') and third (3, 3') restrictions arranged in series, between the source of pressure (8) and the discharge (9), the second (2, 2') and third (3, 3') restriction being capable of being modulated, the first (1, 1') second (2, 2') and third (3, 3') restriction being brought into operation during the said relative displacement between these two components (12, 15) so as to control a hydraulic assistance device (V) incorporating two opposing chambers ($V_1$, $V_2$) joined, respectively, to a circuit corresponding to the first pair of circuits (10, 10') between the second (2, 2') and third (3, 3') restrictions of this circuit, characterized in that each chamber ($V_1$, $V_2$) of the assistance device is joined to the corresponding fluid circuit (10, 10') only between the second (2, 2') and third (3, 3') restrictions of this circuit, the first restrictions (1, 1') introducing a restriction which is substantially constant, the third restrictions (3, 3') introducing a progressive restriction which is substantially linear.

2. Hydraulic distributor according to Claim 1, characterized in that each second restriction (2, 2') introduces a restriction which is at first substantially constant (60) and equal to that of the first restriction (1, 1') of the other circuit, simultaneously with the latter, then progressive (61) substantially simultaneously with the third restriction (3, 3') of the other circuit.

3. Hydraulic distributor according to Claim 1 or Claim 2, characterized in that it incorporates a reaction device with opposed chambers ($R_1$, $R_2$) coupled to the primary component (12) and actuated by reaction pressures ($P_r$) supplied from the pressure source (8) through fourth restrictions (4, 4') arranged, respectively, in a second pair of parallel circuits (20, 20') defined by the primary (12) and secondary (15) components, and brought into operation first during the relative displacement between these primary and secondary components.

4. Hydraulic distributor according to one of the preceding claims, characterized in that the primary component (12) is a flat star-shaped rotor mounted so as to rotate in a complementary disc-shaped housing (14) of a cylindrical stator (15) forming the secondary component, the said restrictions (1, 1' ; 2, 2' ; 3, 3' ; 4, 4') being defined by cooperating edges, which extend substantially radially, from openings (30 ; 40 ; 43 ; 41) formed in the axially facing surfaces of the rotor and of the stator.

5. Hydraulic distributor according to Claim 3 or Claim 4, characterized in that the reaction chambers ($R_1$, $R_2$) are formed by portions which are offset radially outwards of the said housing (14) of the stator (15) on each side of each arm (13) of the star-shaped rotor.

6. Hydraulic distributor according to Claim 5, characterized in that the first (1, 1') second (2, 2') and third (3, 3') restrictions of the first pair of circuits (10, 10') are formed in the arms (13) of the star-shaped rotor (12).

7. Hydraulic distributor according to Claim 6, characterized in that the fourth restrictions (4, 4') of the second pair of circuits (20, 20') are formed in the base of the arms of the star-shaped rotor (12).

8. Hydraulic distributor according to Claim 7, characterized in that the circuits of the second pair of circuits (20, 20') each incorporate a fifth restriction (5, 5') situated between the associated fourth restriction (4, 4') and the discharge (9).

9. Hydraulic distributor according to Claim 7 or Claim 8, characterized in that the first restrictions (1, 1') are formed between a supply opening (30) of the stator (15) and two intermediate closed openings (40) of the rotor (12) on each side of the supply opening (30), the second restrictions (2, 2') being formed between each of the said intermediate openings (40) of the rotor and a corresponding distribution opening (43) of the stator (15), joined to a chamber ($V_1$, $V_2$) of the assistance device (V), the third restrictions (3, 3') being formed between each of these distribution openings (43) of the stator and a return opening (41) of the rotor extending radially inwards and opening into the central return passage (42) of the distributor.

10. Hydraulic distributor according to Claim 8 and Claim 9, characterized in that the fourth restrictions (4, 4') are formed between a closed inner opening (50) of the rotor, offset radially inwards from the intermediate openings (40) of the rotor, and two reaction openings ($r_1$, $r_2$) of the stator situated on each side of the inner opening (50) of the rotor, communicating permanently with the associated reaction chambers ($R_1$, $R_2$) and selectively with the corresponding return openings (41) of the rotor via the said fifth restrictions (5, 5').

11. Hydraulic distributor according to any one of Claims 3 to 10, characterized in that it incorporates a restriction capable of being modulated externally (6) between the source of pressure (8) and the second pair of circuits (20, 20').

12. Hydraulic distributor according to Claim 11, characterized in that it incorporates a valve for limiting the reaction pressure (7) between the restriction which is capable of being modulated externally (6) and the second pair of circuits (20, 20').

13. Hydraulic distributor according to Claim 12, linked to one of Claims 10 and 11, characterized in that the valve for limiting the reaction pressure (7) is built into the stator (15).

14. Hydraulic distributor according to Claim 13, characterized in that the pressure limiting valve (7) incorporates a ring forming a valve (83) pushed axially by elastic washers (84) and situated facing the inner openings (50) of the rotor (12) and the reaction openings ($r_1$, $r_2$) of the stator (15).

**Patentansprüche**

1. Hydraulischer Verteiler für einen Servomechanismus, insbesondere für eine Kraftfahrzeug-Servolenkung, mit einem Primärteil (12), das mit einem Eingangsbetätigungsteil (11) verbunden ist, und einem Sekundärteil (15), die über eine Totgangverbindung einander zugeordnet sind, welche eine begrenzte Relativverschiebung zwischen dem Primär- und Sekundärteil beidseitig zu einer Mittelstellung erlaubt, wobei das Primär- und Sekundärteil gemeinsam zumindest ein erstes Paar von parallelen Strömungskreisen (10, 10') zwischen einer Druckquelle (8) und einem Niederdruckbereich (9) bilden, welche jeweils mindestens eine erste Drosselstelle (1, 1'), eine zweite Drosselstelle (2, 2') und eine dritte Drosselstelle (3, 3') aufweisen, die zwischen der Druckquelle (8) und dem Niederdruckbereich (9) in Reihe geschaltet sind, wobei die zweite (2, 2') und dritte (3, 3') Drosselstelle modulierbar sind und wobei die erste (1, 1'), zweite (2, 2') und dritte (3, 3') Drosselstelle bei einer Relativverschiebung zwischen dem Primär- und Sekundärteil (12, 15) in Betrieb setzbar sind, um eine hydraulische Servovorrichtung (V) mit zwei gegensinnigen Kammern ($V_1$, $V_2$) zu steuern, die jeweils an einen entsprechenden Kreis des ersten Paares von Strömungskreisen (10, 10') zwischen den zweiten (2, 2') und dritten (3, 3') Drosselstellen dieses Kreises verbunden sind, dadurch gekennzeichnet, daß jede Kammer ($V_1$, $V_2$) der Servovorrichtung mit dem entsprechenden Strömungskreis (10, 10') nur zwischen den (2, 2') und dritten (3, 3') Drosselstellen dieses Kreises verbunden ist, wobei die ersten Drosselstellen (1, 1') eine im wesentlichen konstante Drosselung bewirken, während die dritten Drosselstellen (3, 3') eine im wesentlichen linear ansteigende Drosselung bewirken.

2. Hydraulischer Verteiler nach Anspruch 1, dadurch gekennzeichnet, daß jede zweite Drosselstelle (2, 2') eine Drosselung bewirkt, die zunächst im wesentlichen konstant (60) und gleich der der ersten Drosselstelle (1, 1') des anderen Kreises ist und gleichzeitig mit dieser erfolgt und die dann im wesentlichen gleichzeitig mit der dritten Drosselstelle (3, 3') des anderen Kreises ansteigend (61) verläuft.

3. Hydraulischer Verteiler nach Anspruch 1 oder 2, dadurch gekennzeichnet, daß er eine Reaktionsvorrichtung mit entgegengesetzten Kammern ($R_1$, $R_2$) aufweist, welche mit dem Primärteil (12) verbunden ist und von Reaktionsdrücken (Pr) betätigt wird, welche von der Druckquelle (8) über vierte Drosselstellen (4, 4') erzeugt werden, welche in einem zweiten Paar von dem Primärteil (12) und Sekundärteil (5) gebildeter paralleler Kreise (20, 20') vorgesehen sind und als erstes bei der Relativverschiebung zwischen dem Primär- und Sekundärteil in Funktion gesetzt werden.

4. Hydraulischer Verteiler nach einem der vorhergehenden Ansprüche, dadurch gekennzeichnet, daß das Primärteil (12) ein sternförmiger ebener Rotor ist, der in einer komplementären scheibenförmigen Ausnehmung (14) eines das Sekundärteil bildenden zylindrischen Stators (15) drehbar gelagert ist, wobei die besagten Drossel-

stellen (1, 1' ; 2, 2' ; 3, 3' ; 4, 4') von zusammenwirkenden Kanten gebildet werden, die im wesentlichen radial zu Nuten (30 ; 40 ; 43 ; 41) in den axial einander gegenüberliegenden Stirnseiten des Rotors und des Stators verlaufen.

5. Hydraulischer Verteiler nach Anspruch 3 oder 4, dadurch gekennzeichnet, daß die Reaktionskammern ($R_1$, $R_2$) von radial nach außen versetzten Abschnitten der Ausnehmung (14) des Stators (15) beidseitig zu jedem Arm (13) des sternförmigen Rotors gebildet werden.

6. Hydraulischer Verteiler nach Anspruch 5, dadurch gekennzeichnet, daß die ersten (1, 1'), zweiten (2, 2') und dritten (3, 3') Drosselstellen der ersten Paares von Kreisen (10, 10') in den Armen (13) des sternförmigen Rotors (12) gebildet sind.

7. Hydraulischer Verteiler nach Anspruch 6, dadurch gekennzeichnet, daß die vierten Drosselstellen (4, 4') des zweiten Paares von Kreisen (20, 20') in der Basis der Arme des sternförmigen Rotors (12) gebildet sind.

8. Hydraulischer Verteiler nach Anspruch 7, dadurch gekennzeichnet, daß die Kreise des zweiten Paares von Kreisen (20, 20') jeweils eine fünfte Drosselstelle (5, 5') aufweisen, die zwischen der zugeordneten vierten Drosselstelle (4, 4') und dem Niederdruckbereich (9) angeordnet ist.

9. Hydraulischer Verteiler nach Anspruch 7 oder 8, dadurch gekennzeichnet, daß die ersten Drosselstellen (1, 1') zwischen einer Zuführungsnut (30) des Stators (15) und zwei geschlossenen Zwischennuten (40) des Rotors (12) beidseitig zu der Zuführungsnut (30) gebildet sind, während die zweiten Drosselstellen (2, 2') zwischen jeder der Zwischennuten (40) des rotors und einer entsprechenden Verteilernut (43) des Stators (50) gebildet sind, die mit einer Kammer ($V_1$, $V_2$) der Servovorrichtung (V) verbunden ist, und die dritten Drosselstellen (3, 3') zwischen jeder der Verteilernuten (43) des Stators und einer Rückführnut (41) des Rotors gebildet sind, die radial nach innen verlängert ist und in dem zentralen Rückführkanal (42) des Verteilers mündet.

10. Hydraulischer Verteiler nach Anspruch 8 und 9, dadurch gekennzeichnet, daß die vierten Drosselstellen (4, 4') gebildet sind zwischen einer geschlossenen Innennut (50) des Rotors, welche radial nach innen zu den Zwischennuten (40) des Rotors versetzt ist, und zwei Reaktionsnuten ($r_1$, $r_2$) des Stators, die beidseitig zu der Innennut (50) des Rotors angeordnet sind und dauernd mit den zugehörigen Reaktionskammern ($R_1$, $R_2$) und wahlweise mit den entsprechenden Rückführnuten (41) des Rotors über die fünften Drosselstellen (5, 5') in Verbindung stehen.

11. Hydraulischer Verteiler nach einem der Ansprüche 3-10, dadurch gekennzeichnet, daß er eine von außen modulierbare Drosselstelle (6) zwischen der Druckquelle (8) und dem zweiten Paar von Kreisen (20, 20') aufweist.

12. Hydraulischer Verteiler nach Anspruch 11, dadurch gekennzeichnet, daß er ein Reaktionsdruck-Begrenzungsventil (7) zwischen der von außen modulierbaren Drosselstelle (6) und dem zweiten Paar von Bremskreisen (20, 20') aufweist.

13. Hydraulischer Verteiler nach Anspruch 12 in Verbindung mit anspruch 10 und 11, dadurch gekennzeichnet, daß das Reaktionsdruck-Begrenzungsventil (7) in den Stator (15) integriert ist.

14. Hydraulischer Verteiler nach Anspruch 13, dadurch gekennzeichnet, daß das Druckbegrenzungsventil (7) einen ein Ventil (83) bildenden Ring aufweist, der von elastischen Scheiben (84) axial vorgespannt wird und gegenüber den Innennuten (50) des Rotors (12) und der Reaktionsnuten ($r_1$, $r_2$) des Stators (15) angeordnet ist.

0 145 546

FIG_2

FIG_1

0 145 546

FIG_3

FIG_4

FIG_5

FIG_6

FIG. 7

4